# EUROPÄISCHE PATENTSCHRIFT

(11) **EP 4 241 565 B1**
(45) Veröffentlichungstag und Bekanntmachung des Hinweises auf die Patenterteilung: **07.05.2025**
(21) Anmeldenummer: 23155502.0
(22) Anmeldetag: 08.02.2023
(51) Int. Cl.: A21C 3/10, A21C 5/00, A21C 3/02

(54) **TEIGZUFÜHRUNG MIT LOKAL EINGESCHRÄNKTEM DURCHLASSQUERSCHNITT**
DOUGH SUPPLY WITH LOCALLY RESTRICTED PASSAGE CROSS SECTION
DISPOSITIF D'ALIMENTATION EN PÂTE AVEC SECTION TRANSVERSALE DE PASSAGE LOCALEMENT RESTREINTE

(30) Priorität: 11.03.2022 DE 102022105728
(43) Veröffentlichungstag der Anmeldung: 13.09.2023
(73) Patentinhaber: Fritsch Bakery Technologies GmbH & Co. KG, 97348 Markt Einersheim (DE)
(72) Erfinder: DORNER, Fred, 97318 Kitzingen (DE)
(74) Vertreter: Grünecker Patent- und Rechtsanwälte PartG mbB

(56) Entgegenhaltungen:
- AT-B- 351 480
- CN-A- 110 915 842
- US-A- 5 733 583
- US-A- 5 811 145
- US-A- 6 045 840

## Beschreibung

Die Erfindung betrifft das Portionieren von Teig, insbesondere in zumindest teilweise automatisierten Produktionsanlagen für Teigwaren.

Aus der DE 10 2008 000 730 B4 ist eine Teigportioniervorrichtung mit einem Trichter zur Aufnahme einer Teigmasse bekannt. Der Trichter umfasst eine unterseitige Öffnung zum Auslass der Teigmasse zur Portionierung.

Aus der EP 3 603 402 B1 ist eine Vorrichtung zum Führen und Zuführen von Teig zu einem Teigverarbeitungs- oder Transportmittel bekannt. Die Vorrichtung umfasst eine Aufnahmekammer mit einer Einlassöffnung und einer Auslassöffnung gegenüber der Einlassöffnung. Ein Bandförderer bildet einen Teil einer Seitenwand der Aufnahmekammer und erstreckt sich in eine Förderrichtung zwischen der Einlassöffnung und der Auslassöffnung. Zumindest eine stationäre Wand bildet einen anderen Teil der Seitenwand der Aufnahmekammer.

Aus der US 5 733 583 A ist ein System zum Bereitstellen einer Teigbahn bekannt, wobei eine Schnitteinrichtung Teig aus einem Aufnahmebehälter in längliche Portionen teilt.

Es ist Aufgabe der Erfindung, einen verbesserten Weg zum Portionieren von Teig anzugeben.

Diese Aufgabe wird durch den Gegenstand von Anspruch 1 sowie den Gegenstand von Anspruch 15 gelöst. Die abhängigen Ansprüche geben vorteilhafte Ausführungsformen der Erfindung an.

Gemäß einem Aspekt der Erfindung wird eine Portioniervorrichtung für Teig bereitgestellt. Die Portioniervorrichtung umfasst eine Zuführeinrichtung und eine Trenneinrichtung. Die Zuführeinrichtung umfasst eine Seitenwand. Die Seitenwand begrenzt umlaufend einen Durchlass für Teig. Die Zuführeinrichtung umfasst eine Befüllöffnung zum Einfüllen von Teig in den Durchlass. Die Zuführeinrichtung ist derart konfiguriert, dass durch die Befüllöffnung eingefüllter Teig entlang einer Flussrichtung durch den Durchlass zu der Trenneinrichtung fließt. Die Trenneinrichtung ist dazu konfiguriert, den Teig portionsweise abzutrennen. Ein erster Abschnitt der Seitenwand verbindet eine erste Ecke der Seitenwand mit einer zweiten Ecke der Seitenwand. Ein zweiter Abschnitt der Seitenwand verbindet eine dritte Ecke der Seitenwand mit einer vierten Ecke der Seitenwand. Der erste Abschnitt der Seitenwand und der zweite Abschnitt der Seitenwand liegen sich gegenüber. Entlang einer Erstreckungsrichtung des ersten Abschnitts der Seitenwand von der ersten Ecke zu der zweiten Ecke liegt eine Position eines geringsten Abstands zwischen dem ersten Abschnitt der Seitenwand und dem zweiten Abschnitt der Seitenwand näher an einer Mitte zwischen der ersten Ecke und der zweiten Ecke als an der ersten Ecke. Entlang der Erstreckungsrichtung des ersten Abschnitts der Seitenwand von der ersten Ecke zu der zweiten Ecke liegt die Position des geringsten Abstands zwischen dem ersten Abschnitt der Seitenwand und dem zweiten Abschnitt der Seitenwand näher an der Mitte zwischen der ersten Ecke und der zweiten Ecke als an der zweiten Ecke.

Im Bereich der Ecken der Seitenwand kann eine Verlangsamung des Teigflusses durch den Durchlass aufgrund von Reibung zwischen dem Teig und der Seitenwand besonders ausgeprägt sein. Durch eine lokale Verengung des Durchlasses an der Stelle des geringsten Abstands zwischen dem ersten Abschnitt der Seitenwand und dem zweiten Abschnitt der Seitenwand kann ein Durchflusswiderstand für durch den Durchlass fließenden Teig in einem Bereich zwischen den Ecken erhöht werden. Dieser erhöhte Durchflusswiderstand kann einen Unterschied in Flussgeschwindigkeiten des Teigs zwischen Eckbereichen des Durchlasses und von den Ecken beabstandeten Bereichen des Durchlasses zumindest teilweise ausgleichen oder abmildern. Die Formgebung und/oder der Verlauf der Seitenwand kann dazu führen, dass der Teig über einen gesamten Durchlassquerschnitt des Durchlasses zu der Trenneinrichtung fließt. Insbesondere kann ein Durchlassquerschnitt des Durchlasses auch im Bereich der Ecken einen ausreichenden Teigdurchsatz aufweisen, um die Trenneinrichtung gleichmäßig mit Teig zu versorgen.

Vorzugsweise ist ein Volumendurchsatz an Teig pro Fläche eines Durchlassquerschnitts des Durchlasses über den gesamten Durchlassquerschnitt des Durchlasses hinweg bis auf eine maximale Abweichung von 5% oder von 10% oder von 20% oder von 30% des maximalen Werts des Volumendurchsatzes an Teig pro Fläche des Durchlassquerschnitts konstant.

An der Position des geringsten Abstands zwischen dem ersten Abschnitt der Seitenwand und dem zweiten Abschnitt der Seitenwand kann für einen Teigfluss entlang der Flussrichtung eine lokale Einschnürung des Durchlassquerschnitts des Durchlasses in einer senkrecht zu der Flussrichtung stehenden Schnittebene vorliegen.

Eine den Durchlass begrenzende Innenfläche der Seitenwand kann zumindest an der Position des geringsten Abstands zwischen dem ersten Abschnitt der Seitenwand und dem zweiten Abschnitt der Seitenwand in den Durchlass hinein gewölbt sein. Die den Durchlass begrenzende Innenfläche der Seitenwand kann zumindest eine in den Durchlass hinein gerichtete Ausbuchtung aufweisen.

Die Seitenwand kann in einer senkrecht zu der Flussrichtung stehenden Schnittebene in einem Bereich gekrümmt sein, welcher die Position des geringsten Abstands zwischen dem ersten Abschnitt der Seitenwand und dem zweiten Abschnitt der Seitenwand umfasst. In der senkrecht zu der Flussrichtung stehenden Schnittebene kann die Position des geringsten Abstands zwischen dem ersten Abschnitt der Seitenwand und dem zweiten Abschnitt der Seitenwand einen Umkehrpunkt eines gekrümmten Abschnitts der Seitenwand darstellen.

Die Seitenwand kann um den Durchlass herum eine konstante Wandstärke aufweisen. Eine Wandstärke der Seitenwand kann um den Durchlass herum variieren.

Bei einem Fortschreiten entlang der Erstreckungsrichtung des ersten Abschnitts der Seitenwand von der ersten Ecke zu der zweiten Ecke kann der Abstand zwischen dem ersten Abschnitt der Seitenwand und dem zweiten Abschnitt der Seitenwand erst zunehmen und dann wieder abnehmen.

Bei einem Fortschreiten entlang der Erstreckungsrichtung des ersten Abschnitts der Seitenwand von der ersten Ecke zu der zweiten Ecke kann der Abstand zwischen dem ersten Abschnitt der Seitenwand und dem zweiten Abschnitt der Seitenwand zumindest bereichsweise konstant sein.

Bei einem Fortschreiten entlang der Erstreckungsrichtung des ersten Abschnitts der Seitenwand von der ersten Ecke zu der zweiten Ecke kann der Abstand zwischen dem ersten Abschnitt der Seitenwand und dem zweiten Abschnitt der Seitenwand in einem Bereich zwischen der ersten Ecke und der Position des geringsten Abstands zwischen dem ersten Abschnitt der Seitenwand und dem zweiten Abschnitt der Seitenwand durchgängig entweder konstant oder zunehmend sein und zwischen der Position des geringsten Abstands zwischen dem ersten Abschnitt der Seitenwand und dem zweiten Abschnitt der Seitenwand und der zweiten Ecke durchgängig entweder konstant oder abnehmend sein.

Der erste Abschnitt der Seitenwand und der zweite Abschnitt der Seitenwand können zueinander spiegelbildlich verlaufen. Der erste Abschnitt der Seitenwand und der zweite Abschnitt der Seitenwand können bezüglich einer zu der Flussrichtung parallel stehenden Symmetrieebene zueinander spiegelsymmetrisch sein. Symmetrien der Seitenwand können einen homogenen Fluss von Teig durch den Durchlass begünstigen.

Die erste Ecke der Seitenwand kann parallel zu der Flussrichtung verlaufen oder zumindest eine Erstreckungsrichtung mit einer Komponente in Richtung der Flussrichtung aufweisen. Die zweite Ecke der Seitenwand kann parallel zu der Flussrichtung verlaufen oder zumindest eine Erstreckungsrichtung mit einer Komponente in Richtung der Flussrichtung aufweisen. Die dritte Ecke der Seitenwand kann parallel zu der Flussrichtung verlaufen oder zumindest eine Erstreckungsrichtung mit einer Komponente in Richtung der Flussrichtung aufweisen. Die vierte Ecke der Seitenwand kann parallel zu der Flussrichtung verlaufen oder zumindest eine Erstreckungsrichtung mit einer Komponente in Richtung der Flussrichtung aufweisen.

Die Flussrichtung kann eine vertikale Richtung sein oder zumindest eine vertikale Komponente umfassen. Die Flussrichtung kann gegenüber einer vertikalen Richtung um weniger als 30 Grad, oder um weniger 25 Grad, oder um weniger als 20 Grad, oder um weniger als 15 Grad, oder um weniger als 10 Grad, oder um weniger als 5 Grad geneigt sein.

Ein dritter Abschnitt der Seitenwand kann die erste Ecke der Seitenwand mit der dritten Ecke der Seitenwand verbinden. Ein vierter Abschnitt der Seitenwand kann die zweite Ecke der Seitenwand mit der vierten Ecke der Seitenwand verbinden. Der erste Abschnitt der Seitenwand, der zweite Abschnitt der Seitenwand, der dritte Abschnitt der Seitenwand und der vierte Abschnitt der Seitenwand können zusammen den Durchlass um die Flussrichtung herum vollständig umlaufend umschließen. Die Seitenwand kann einstückig ausgebildet sein. Die Seitenwand kann getrennt voneinander ausgebildete Abschnitte umfassen.

Die Ecken der Seitenwand können Bereiche sein, in denen benachbarte Abschnitte der Seitenwand aufeinandertreffen und/oder miteinander verbunden sind. In den Ecken kann eine Erstreckungsrichtung der Seitenwand in einer zu der Flussrichtung senkrecht stehenden Schnittebene um einen Eckwinkel um eine parallel zu der Flussrichtung stehende Mittelachse des Durchlasses herum umgelenkt werden. Der Eckwinkel kann zwischen 70 Grad und 110 Grad, oder zwischen 80 Grad und 100 Grad, oder zwischen 85 Grad und 95 Grad betragen. Der Eckwinkel kann zumindest im Wesentlichen 90 Grad betragen.

Die Ecken können als scharfe Knickkanten zwischen zwei benachbarten Abschnitten der Seitenwand ausgebildet sein. Die Ecken können einen abgerundeten Charakter haben. Die Seitenwand kann genau vier Ecken aufweisen.

Die Erstreckungsrichtung des ersten Abschnitts der Seitenwand von der ersten Ecke zu der zweiten Ecke kann eine Haupterstreckungsrichtung der Zuführeinrichtung senkrecht zu der Flussrichtung sein.

In einer senkrecht zu der Flussrichtung stehenden Schnittebene kann ein Durchlassquerschnitt des Durchlasses für einen Teigfluss entlang der Flussrichtung zumindest im Wesentlichen rechteckig ausgebildet sein.

Die Seitenwand kann zumindest bereichsweise formveränderlich sein. Die Seitenwand kann zumindest bereichsweise biegsam ausgebildet sein. Der erste Abschnitt der Seitenwand kann zumindest bereichsweise formveränderlich und/oder biegsam ausgebildet sein. Der zweite Abschnitt der Seitenwand kann zumindest bereichsweise formveränderlich und/oder biegsam ausgebildet sein. Einander gegenüberliegende Bereiche des ersten Abschnitts der Seitenwand und des zweiten Abschnitts der Seitenwand können formveränderlich und/oder biegsam ausgebildet sein. Der erste Abschnitt der Seitenwand und der zweite Abschnitt der Seitenwand können zumindest in einem die Position des geringsten Abstands zwischen dem ersten Abschnitt der Seitenwand und dem zweiten Abschnitt der Seitenwand umfassenden Bereich formveränderlich und/oder biegsam ausgebildet sein. "Formveränderlich" bezieht sich auf die Möglichkeit einer reversiblen Formveränderung. "Biegsam" bezieht sich auf die Möglichkeit einer reversiblen Biegung.

Die Portioniervorrichtung kann eine Einstellvorrichtung umfassen. Die Einstellvorrichtung kann dazu konfiguriert sein, den Abstand zwischen dem ersten Abschnitt der Seitenwand und dem zweiten Abschnitt der Seitenwand lokal variabel einzustellen. Die Einstellvorrichtung kann dazu konfiguriert sein, den geringsten Abstand zwischen dem ersten Abschnitt der Seitenwand und dem zweiten Abschnitt der Seitenwand variabel einzustellen. Die Einstellvorrichtung kann dazu konfiguriert sein, den Abstand zwischen dem ersten Abschnitt der Seitenwand und dem zweiten Abschnitt der Seitenwand an der Position des geringsten Abstands zwischen dem ersten Abschnitt der Seitenwand und dem zweiten Abschnitt der Seitenwand variabel einzustellen. Durch variables Einstellen des Abstands zwischen dem ersten Abschnitt der Seitenwand und dem zweiten Abschnitt der Seitenwand kann der Durchlass an Fließeigenschaften eines jeweils verwendeten Teigs angepasst werden. Wenn beispielsweise festgestellt wird, dass beim Verarbeiten eines bestimmten Teigs im Bereich der Ecken der Seitenwand zu wenig Teig pro Zeiteinheit die Trenneinrichtung erreicht, kann ein Reduzieren des Durchflussquerschnitts zwischen benachbarten Ecken der Seitenwand dazu führen, dass das Durchflussvolumen pro Zeiteinheit im Bereich der Ecken erhöht wird.

Die Einstellvorrichtung kann dazu konfiguriert sein, eine lokale Einschnürung eines Durchlassquerschnitts des Durchlasses in einer senkrecht zu der Flussrichtung stehenden Schnittebene variabel einzustellen.

Die Einstellvorrichtung kann dazu konfiguriert sein, die Seitenwand lokal zu verformen. Die Einstellvorrichtung kann dazu konfiguriert sein, den ersten Abschnitt der Seitenwand lokal zu verformen. Die Einstellvorrichtung kann dazu konfiguriert sein, den zweiten Abschnitt der Seitenwand lokal zu verformen. Die Einstellvorrichtung kann dazu konfiguriert sein, den ersten Abschnitt der Seitenwand und den zweiten Abschnitt der Seitenwand lokal zu verformen. Die Einstellvorrichtung kann dazu konfiguriert sein, den ersten Abschnitt der Seitenwand und/oder den zweiten Abschnitt der Seitenwand lokal aufeinander zu zu verformen. Die Einstellvorrichtung kann dazu konfiguriert sein, den ersten Abschnitt der Seitenwand und/oder den zweiten Abschnitt der Seitenwand lokal in den Durchlass hinein zu verformen.

Die Einstellvorrichtung kann dazu konfiguriert sein, den geringsten Abstand zwischen dem ersten Abschnitt der Seitenwand und dem zweiten Abschnitt der Seitenwand variabel einzustellen. Die Einstellvorrichtung kann dazu konfiguriert sein, den geringsten Abstand zwischen dem ersten Abschnitt der Seitenwand und dem zweiten Abschnitt der Seitenwand wahlweise zu verringern. Die Einstellvorrichtung kann dazu konfiguriert sein, den geringsten Abstand zwischen dem ersten Abschnitt der Seitenwand und dem zweiten Abschnitt der Seitenwand wahlweise zu erhöhen.

Die Trenneinrichtung kann als Sternwalze ausgebildet sein. Die Sternwalze kann zwei Walzkörper umfassen, welche dazu konfiguriert sind, um zueinander parallele Walzenachsen gegenläufig zu rotieren. Die Flussrichtung kann senkrecht zu den Walzenachsen der Sternwalze verlaufen.

Die Zuführeinrichtung kann dazu konfiguriert sein, den Teig über einen kompletten Durchlassquerschnitt des Durchlasses hinweg der Trenneinrichtung zu übergeben. Die Trenneinrichtung kann dazu konfiguriert sein, Teig von der Zuführeinrichtung über einen rechteckigen Aufnahmequerschnitt aufzunehmen.

Gemäß einem weiteren Aspekt der Erfindung wird eine Verwendung einer Zuführeinrichtung bereitgestellt. Es wird eine Zuführeinrichtung mit einem in einer senkrecht zu einer Flussrichtung stehenden Schnittebene bereichsweise eingeschnürten Durchlassquerschnitt verwendet, um entlang der Flussrichtung durch die Zuführeinrichtung fließenden Teig einer Trenneinrichtung zum portionsweisen Abtrennen des Teigs derart zuzuführen, dass der Teig die Trenneinrichtung über den kompletten Durchlassquerschnitt der Zuführeinrichtung erreicht.

Die Zuführeinrichtung und die Trenneinrichtung können die Zuführeinrichtung und die Trenneinrichtung der beschriebenen Portioniervorrichtung sein. In Bezug auf den Aspekt der Portioniervorrichtung beschriebene Merkmale, Ausführungen und Erläuterungen sind auf den Aspekt der Verwendung einer Zuführeinrichtung übertragbar. In Bezug auf den Aspekt der der Verwendung einer Zuführeinrichtung beschriebene Merkmale, Ausführungen und Erläuterungen sind auf den Aspekt der Portioniervorrichtung übertragbar. Die Portioniervorrichtung kann dazu geeignet, ausgelegt und/oder konfiguriert sein, die Verwendung durchzuführen. Die Verwendung kann an der beschriebenen Positioniervorrichtung durchgeführt werden.

Im Folgenden wird die Erfindung anhand von Ausführungsformen unter Bezugnahme auf die Figuren weiter erläutert.
Figur 1 zeigt eine schematische seitliche Schnittansicht einer Teigverarbeitungsanordnung mit einer Portioniervorrichtung gemäß einer Ausführungsform.
Figur 2 zeigt eine schematische Schnittansicht der Teigverarbeitungsanordnung aus Figur 1, wobei die Schnittebene in Figur 1 durch die Linie II-II dargestellt ist.
Figur 3 zeigt eine schematische Draufsicht auf die Portioniervorrichtung gemäß einer Ausführungsform.
Figur 4 zeigt eine schematische Draufsicht auf die Portioniervorrichtung aus Figur 3, wobei ein geringster Abstand zwischen gegenüberliegenden Seitenwänden der Zuführeinrichtung gegenüber Figur 3 verringert wurde.
Figur 5 zeigt eine schematische Draufsicht auf eine Portioniervorrichtung gemäß einer weiteren Ausführungsform.

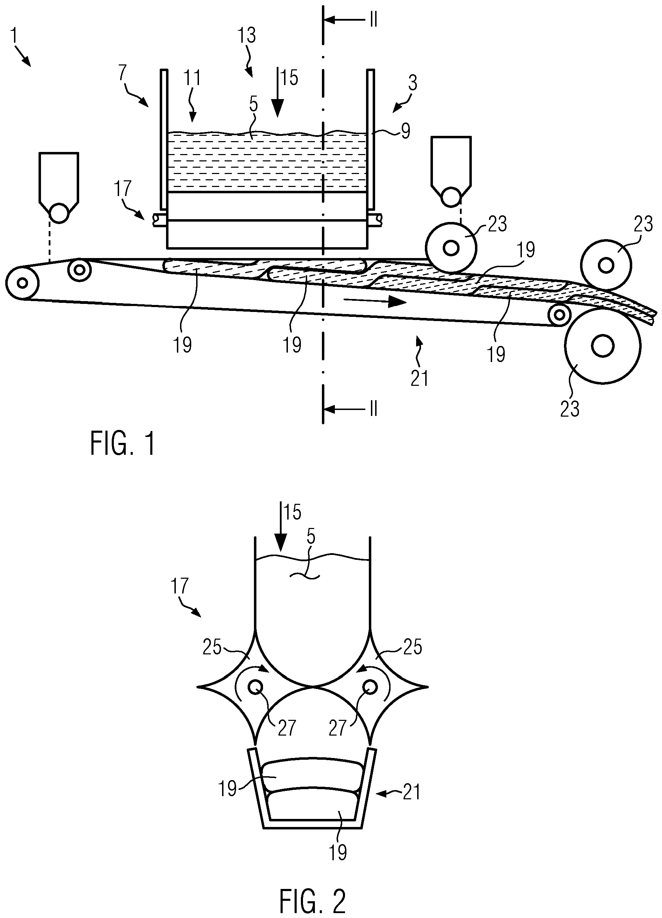

Figur 1 zeigt eine schematische seitliche Schnittansicht einer Teigverarbeitungsanordnung 1. Die Teigverarbeitungsanordnung 1 kann beispielsweise Teil einer zumindest teilweise automatisierten Anordnung zum Herstellen von Backwaren sein. Die Teigverarbeitungsanordnung 1 umfasst eine Portioniervorrichtung 3 zum Portionieren von Teig 5. Die Portioniervorrichtung 3 umfasst eine Zuführeinrichtung 7. Die Zuführeinrichtung 7 umfasst eine Seitenwand 9, welche einen Durchlass 11 für Teig 5 umlaufend begrenzt. Teig 5 kann durch eine nach oben geöffnete Befüllöffnung 13 in den Durchlass 11 gekippt werden. Durch die Befüllöffnung 13 eingefüllter Teig 5 fließt entlang einer Flussrichtung 15 durch den Durchlass 11 zu einer Trenneinrichtung 17 der Portioniervorrichtung 3. Die Flussrichtung 15 ist in der dargestellten Ausführungsform eine vertikale Richtung, sodass der Teig 5 aufgrund der Gravitation von alleine durch den Durchlass 11 zu der Trenneinrichtung 17 fließt. Die Trenneinrichtung 17 trennt den ihr von der Zuführeinrichtung 7 zugeführten Teig 5 portionsweise ab. Die abgetrennten Teigportionen 19 fallen von der Trenneinrichtung 17 auf eine unter der Trenneinrichtung 17 vorbeilaufende Fördereinrichtung 21. Die Teigportionen 19 liegen auf der Fördereinrichtung 21 überlappend vor und werden von Walzeinrichtungen 23 zu einem kontinuierlichem Teigband geformt.

Um auf der Fördereinrichtung 21 eine gleichmäßige Teigverteilung zu erreichen, ist es wünschenswert, den Teig 5 der Trenneinrichtung 17 über den ganzen Durchflussquerschnitt des Durchlasses 11 hinweg zuzuführen.

Figur 2 zeigt eine schematische Schnittansicht in einer zu der Flussrichtung 15 parallelen Schnittebene, welche in Figur 1 mit der Linie II-II angedeutet ist. Die Trenneinrichtung 17 ist als Sternwalze ausgebildet, welche zwei im Schnitt sternförmige Walzkörper 25 aufweist. Die Walzkörper 25 rotieren gegenläufig jeweils um eine zugeordnete Walzenachse 27. Die Walzenachsen 27 sind parallel zueinander angeordnet. Es ist aus Figur 2 ersichtlich, dass die Walzkörper 25 bei gegenläufigem Rotieren Teigportionen 19 von dem der Zuführeinrichtung 7durch den Durchlass 11 zugeführten Teig 5 abtrennen und nach unten auf die Fördereinrichtung 19 fallen lassen.

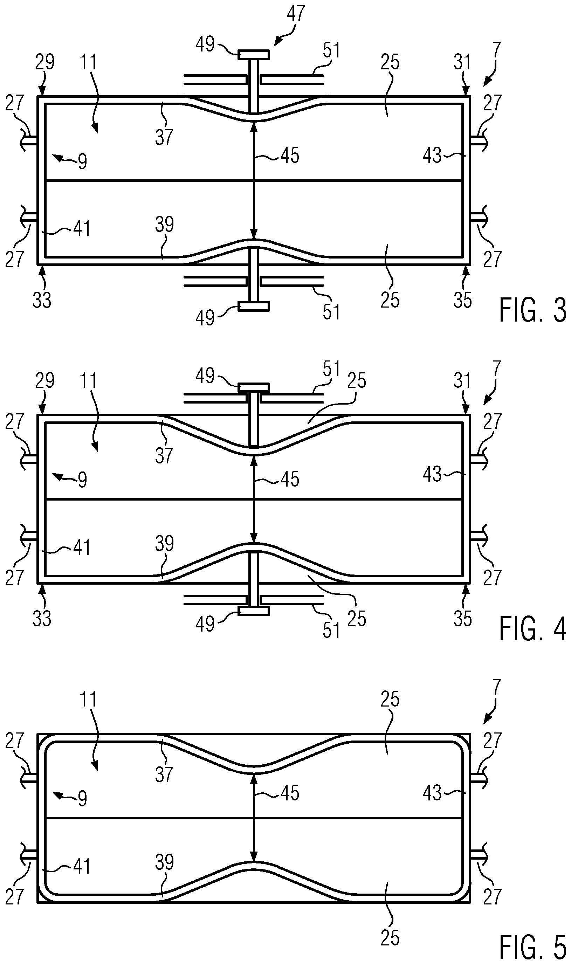

Figur 3 zeigt eine schematische Draufsicht auf die Zuführeinrichtung 7, wobei die darunter angeordnete Trenneinrichtung 17 mit den beiden parallel laufenden Walzkörpern 25 ebenfalls in Draufsicht sichtbar ist.

In der dargestellten Ausführungsform hat der Durchlass 11 einen im Wesentlichen rechteckigen Querschnitt. Eine Haupterstreckungsrichtung der Zuführeinrichtung 7 ist parallel zu der Erstreckungsrichtung der Walzenachsen 27 der Trenneinrichtung 17. Die den Durchlass 11 begrenzende Seitenwand 9 weist vier Ecken auf, eine erste Ecke 29, eine zweite Ecke 31, eine dritte Ecke 33 und eine vierte Ecke 35. Ein erster Abschnitt 37 der Seitenwand 9 verbindet die erste Ecke 29 und die zweite Ecke 31. Ein zweiter Abschnitt 39 der Seitenwand 9 verbindet die dritte Ecke 33 und die vierte Ecke 35. Ein dritter Abschnitt 41 der Seitenwand 9 verbindet die erste Ecke 29 und die dritte Ecke 33. Ein vierter Abschnitt 43 der Seitenwand 9 verbindet die zweite Ecke 31 und die vierte Ecke 35. Der erste Abschnitt 37 und der zweite Abschnitt 39 der Seitenwand 9 liegen einander gegenüber und sind zueinander spiegelsymmetrisch ausgebildet. Der dritte Abschnitt 41 und der vierte Abschnitt 43 der Seitenwand 9 liegen einander gegenüber und sind zueinander spiegelbildlich ausgebildet.

Mittig zwischen der ersten Ecke 29 und der zweiten Ecke 31 ist der erste Abschnitt 37 der Seitenwand 9 in den Durchlass 11 hinein ausgewölbt. Entsprechend ist mittig zwischen der dritten Ecke 33 und der vierten Ecke 35 der zweite Abschnitt 39 der Seitenwand 9 in den Durchlass 11 hinein ausgewölbt. Somit liegt ein minimaler Abstand 45 zwischen dem ersten Abschnitt 37 und dem zweiten Abschnitt 39 der Seitenwand 9 bezüglich einer Erstreckungsrichtung des ersten Abschnitts 37 der Seitenwand 9 mittig zwischen der ersten Ecke 29 und der zweiten Ecke 31. Durch die Auswölbungen des ersten Abschnitts 37 und des zweiten Abschnitts 39 der Seitenwand 9 im Bereich des geringsten Abstands 45 zwischen dem ersten Abschnitt 37 und dem zweiten Abschnitt 39 der Seitenwand 9 liegt eine lokale Einschnürung oder Verengung des Durchlassquerschnitts des Durchlasses 11 vor. Durch die Einschnürung wird ein Durchflusswiderstand für Teigfluss entlang der Flussrichtung 15 lokal erhöht. Hierdurch wird ein Teildurchfluss im Bereich der Ecken 29, 31, 33, 35 begünstigt, so dass auch im Bereich der Ecken 29, 31, 33, 35 ein ausreichender Teigdurchsatz vorhanden ist, um die Trenneinrichtung 17 über den gesamten Durchlassquerschnitt hinweg mit Teig 5 zu versorgen und somit eine gleichmäßige Teigvolumenverteilung auf der Transporteinrichtung 21 erreichbar ist.

Um die Portioniervorrichtung 3 zum Verarbeiten unterschiedlicher Teigsorten anpassen zu können, ist eine Einstellvorrichtung 47 vorgesehen, mit welcher der geringste Abstand 45 zwischen dem ersten Abschnitt 37 der Seitenwand 9 und dem zweiten Abschnitt 39 der Seitenwand 9 variabel einstellbar ist, also verringert oder vergrößert werden kann. In der dargestellten Ausführungsform sind der erste Abschnitt 37 und der zweite Abschnitt 39 der Seitenwand 9 aus einem reversibel verformbaren Material ausgebildet, zum Beispiel aus einem Kunststoffmaterial. Die Einstellvorrichtung 47 umfasst in der dargestellten Ausführungsform Verformungselemente 49, welche dazu ausgebildet sind, den ersten Abschnitt 37 und den zweiten Abschnitt 39 der Seitenwand 9 jeweils mittig zwischen den korrespondierenden Ecken (erste Ecke 29 und zweite Ecke 31 für den ersten Abschnitt 37 der Seitenwand 9, und dritte Ecke 33 und vierte Ecke 35 für den zweiten Abschnitt 39 der Seitenwand 9) in den Durchlass 11 hinein aufeinander zu zu verformen.

In der dargestellten Ausführungsform sind die Verformungselemente 49 als Schraubelemente ausgebildet, welche von außen gegen die Seitenwand 9 schraubbar sind, um entsprechende Bereiche der Seitenwand 9 in den Durchlass 11 hinein zu verformen. Die Verformungselemente 49 können durch weiteres Einschrauben in Gewindebleche 51 betätigt werden, um den geringsten Abstand 45 zwischen dem ersten Abschnitt 37 der Seitenwand 9 und dem zweiten Abschnitt 39 der Seitenwand 9 zu verringern. Entsprechend können die als Schraubelemente ausgebildeten Verformungselemente 49 in Herausschraub-Richtung gedreht werden, um eine Rückverformung des ersten Abschnitts 37 der Seitenwand 9 und des zweiten Abschnitts 39 der Seitenwand 9 zum Vergrößern des geringsten Abstands 45 zwischen dem ersten Abschnitt 37 und dem zweiten Abschnitt 39 der Seitenwand 9 zu erlauben.

Figur 4 zeigt die Ansicht aus Figur 3, nachdem die Verformungselemente 49 durch weiteres Drehen in Einschraub-Richtung zum Verringern des geringsten Abstands 45 zwischen dem ersten Abschnitt 37 und dem zweiten Abschnitt 39 der Seitenwand 9 betätigt wurden.

In den Figuren 3 und 4 sind die Ecken 29, 31, 33, 35 der Seitenwand 9 als scharfe Kanten dargestellt. Dies ist nicht zwingend erforderlich. Wie in Figur 5 dargestellt, können die Ecken 29, 31, 33, 35 alternativ auch als gerundete Ecken ausgebildet sein.

## Patentansprüche

1. Portioniervorrichtung (3) für Teig (5), umfassend:
eine Zuführeinrichtung (7) mit einer Seitenwand (9), wobei die Seitenwand (9) einen Durchlass (11) für Teig (5) umlaufend begrenzt, und mit einer Befüllöffnung (13) zum Einfüllen von Teig (5) in den Durchlass (11); und
eine Trenneinrichtung (17), welche dazu konfiguriert ist, den Teig (5) portionsweise abzutrennen;
wobei die Zuführeinrichtung (7) derart konfiguriert ist, dass durch die Befüllöffnung (13) eingefüllter Teig (5) entlang einer Flussrichtung (15) durch den Durchlass (11) zu der Trenneinrichtung (17) fließt;
wobei ein erster Abschnitt (37) der Seitenwand (9) eine erste Ecke (29) der Seitenwand (9) mit einer zweiten Ecke (31) der Seitenwand (9) verbindet;
wobei ein zweiter Abschnitt (39) der Seitenwand (9) eine dritte Ecke (33) der Seitenwand (9) mit einer vierten Ecke (35) der Seitenwand (9) verbindet; und
wobei sich der erste Abschnitt (37) der Seitenwand (9) und der zweite Abschnitt (39) der Seitenwand (9) gegenüberliegen,
**dadurch gekennzeichnet, dass**
eine Position eines geringsten Abstands (45) zwischen dem ersten Abschnitt (37) der Seitenwand (9) und dem zweiten Abschnitt (39) der Seitenwand (9) entlang einer Erstreckungsrichtung des ersten Abschnitts (37) der Seitenwand (9) von der ersten Ecke (29) zu der zweiten Ecke (31) näher an einer Mitte zwischen der ersten Ecke (29) und der zweiten Ecke (31) liegt als an der ersten Ecke (29) und näher an der Mitte zwischen der ersten Ecke (29) und der zweiten Ecke (31) liegt als an der zweiten Ecke (31).

2. Portioniervorrichtung nach Anspruch 1, wobei zumindest an der Position des geringsten Abstands (45) für einen Teigfluss entlang der Flussrichtung (15) eine lokale Einschnürung eines Durchlassquerschnitts des Durchlasses (11) in einer senkrecht zu der Flussrichtung (15) stehenden Schnittebene vorliegt.

3. Portioniervorrichtung nach Anspruch 1 oder 2, wobei eine den Durchlass (11) begrenzende Innenfläche der Seitenwand (9) zumindest an der Position des geringsten Abstands (45) zwischen dem ersten Abschnitt (37) der Seitenwand (9) und dem zweiten Abschnitt (39) der Seitenwand (9) in den Durchlass (11) hinein ausgewölbt ist.

4. Portioniervorrichtung nach einem der vorangehenden Ansprüche, wobei bei einem Fortschreiten entlang der Erstreckungsrichtung des ersten Abschnitts (37) der Seitenwand (9) von der ersten Ecke (29) zu der zweiten Ecke (31) der Abstand zwischen dem ersten Abschnitt (37) der Seitenwand (9) und dem zweiten Abschnitt (39) der Seitenwand (9) erst zunimmt und dann wieder abnimmt.

5. Portioniervorrichtung nach einem der vorangehenden Ansprüche, wobei der erste Abschnitt (37) der Seitenwand (9) und der zweite Abschnitt (39) der Seitenwand (9) zueinander spiegelbildlich verlaufen.

6. Portioniervorrichtung nach einem der vorangehenden Ansprüche, wobei die Erstreckungsrichtung des ersten Abschnitts (37) der Seitenwand (9) von der ersten Ecke (29) zu der zweiten Ecke (31) eine Haupterstreckungsrichtung der Zuführeinrichtung (7) senkrecht zu der Flussrichtung (15) ist.

7. Portioniervorrichtung nach einem der vorangehenden Ansprüche, wobei in einer senkrecht zu der Flussrichtung (15) stehenden Schnittebene ein Durchlassquerschnitt des Durchlasses (11) für einen Teigfluss entlang der Flussrichtung (15) zumindest im Wesentlichen rechteckig ausgebildet ist.

8. Portioniervorrichtung nach einem der vorangehenden Ansprüche, wobei die Seitenwand (9) zumindest bereichsweise formveränderlich ist.

9. Portioniervorrichtung nach einem der vorangehenden Ansprüche, zudem umfassend eine Einstellvorrichtung (47), welche dazu konfiguriert ist, den Abstand zwischen dem ersten Abschnitt (37) der Seitenwand (9) und dem zweiten Abschnitt (39) der Seitenwand (9) lokal variabel einzustellen.

10. Portioniervorrichtung nach einem der vorangehenden Ansprüche, zudem umfassend eine Einstellvorrichtung (47), welche dazu konfiguriert ist, eine lokale Einschnürung eines Durchlassquerschnitts des Durchlasses (11) in einer senkrecht zu der Flussrichtung (15) stehenden Schnittebene variabel einzustellen.

11. Portioniervorrichtung nach Anspruch 9 oder 10, wobei die Einstellvorrichtung (47) dazu konfiguriert ist, die Seitenwand (9) lokal zu verformen.

12. Portioniervorrichtung nach einem der Ansprüche 9 bis 11, wobei die Einstellvorrichtung (47) dazu konfiguriert ist, den geringsten Abstand (45) zwischen dem ersten Abschnitt (37) der Seitenwand (9) und den zweiten Abschnitt (39) der Seitenwand (9) variabel einzustellen.

13. Portioniervorrichtung nach einem der vorangehenden Ansprüche, wobei die Trenneinrichtung (17) als Sternwalze ausgebildet ist.

14. Portioniervorrichtung nach einem der vorangehenden Ansprüche, wobei die Zuführeinrichtung (7) dazu konfiguriert ist, den Teig (5) über einen kompletten Durchlassquerschnitt des Durchlasses (11) hinweg der Trenneinrichtung (17) zu übergeben.

15. Verwendung einer Zuführeinrichtung (7) mit einem in einer senkrecht zu einer Flussrichtung (15) stehenden Schnittebene bereichsweise eingeschnürten Durchlassquerschnitt, um entlang der Flussrichtung (15) durch die Zuführeinrichtung (7) fließenden Teig (5) einer Trenneinrichtung (17) zum portionsweisen Abtrennen des Teigs (5) derart zuzuführen, dass der Teig (5) die Trenneinrichtung (17) über den kompletten Durchlassquerschnitt der Zuführeinrichtung (7) erreicht.

## Claims

1. Portioning device (3) for dough (5), comprising:
a feeding device (7) having a side wall (9), the side wall (9) circumferentially delimiting a passage (11) for dough (5), and having a filling opening (13) for introducing dough (5) into the passage (11); and
a separating device (17) configured to separate the dough (5) into portions;
wherein the feeding device (7) is configured such that dough (5) filled in through the filling opening (13) flows along a flow direction (15) through the passage (11) to the separating device (17);
wherein a first section (37) of the side wall (9) connects a first corner (29) of the side wall (9) to a second corner (31) of the side wall (9);
wherein a second section (39) of the side wall (9) connects a third corner (33) of the side wall (9) to a fourth corner (35) of the side wall (9); and
wherein the first section (37) of the side wall (9) and the second section (39) of the side wall (9) are opposed to each other,
**characterized in that**
a position of a shortest distance (45) between the first section (37) of the side wall (9) and the second section (39) of the side wall (9) along an extension direction of the first section (37) of the side wall (9) from the first corner (29) to the second corner (31) is closer to a center between the first corner (29) and the second corner (31) than to the first corner (29) and closer to the center between the first corner (29) and the second corner (31) than to the second corner (31).

2. Portioning device according to claim 1, wherein at least at the position of the shortest distance (45), there is a local constriction of a throughput cross section of the passage (11) in a sectional plane perpendicular to the flow direction (15) for a flow of dough along the flow direction (15).

3. Portioning device according to claim 1 or 2, wherein an inner surface of the side wall (9) that delimits the passage (11) is bulged into the passage (11) at least at the position of the shortest distance (45) between the first section (37) of the side wall (9) and the second section (39) of the side wall (9).

4. Portioning device according to any one of the preceding claims, wherein, when progressing along the extension direction of the first section (37) of the side wall (9) from the first corner (29) to the second corner (31), the distance between the first section (37) of the side wall (9) and the second section (39) of the side wall (9) first increases and then decreases again.

5. Portioning device according to any one of the preceding claims, wherein the first section (37) of the side wall (9) and the second section (39) of the side wall (9) extend in a mirror-image fashion relative to one another.

6. Portioning device according to any one of the preceding claims, wherein the extension direction of the first section (37) of the side wall (9) from the first corner (29) to the second corner (31) is a main extension direction of the feeding device (7) perpendicular to the flow direction (15).

7. Portioning device according to any one of the preceding claims, wherein in a sectional plane perpendicular to the flow direction (15), a throughput cross section of the passage (11) for a dough flow along the flow direction (15) is at least substantially rectangular.

8. Portioning device according to any one of the preceding claims, wherein the side wall (9) is variable in shape at least in a region-wise manner.

9. Portioning device according to any one of the preceding claims, further comprising an adjusting device (47) configured to adjust the distance between the first section (37) of the side wall (9) and the second section (39) of the side wall (9) in a locally variable manner.

10. Portioning device according to any one of the preceding claims, further comprising an adjusting device (47) configured to adjust a local constriction of a throughput cross-section of the passage (11) in a sectional plane perpendicular to the flow direction (15).

11. Portioning device according to claim 9 or 10, wherein the adjusting device (47) is configured to locally deform the side wall (9).

12. Portioning device according to any one of claims 9 to 11, wherein the adjusting device (47) is configured to adjust the shortest distance (45) between the first section (37) of the side wall (9) and the second section (39) of the side wall (9) in a variable manner.

13. Portioning device according to any one of the preceding claims, wherein the separating device (17) is configured as a star roller.

14. Portioning device according to any one of the preceding claims, wherein the feeding device (7) is configured to transfer the dough (5) to the separating device (17) over a complete throughput cross section of the passage (11).

15. Use of a feeding device (7) with a throughput cross section which is constricted in a region-wise manner in a sectional plane perpendicular to a flow direction (15), to feed dough (5) flowing along the flow direction (15) through the feeding device (7) to a separating device (17) for separating the dough (5) in portions in such a way that the dough (5) reaches the separating device (17) over the entire throughput cross-section of the feeding device (7).

## Revendications

1. Dispositif de portionnement (3) de pâte (5), comprenant :
un dispositif d'alimentation (7) avec une paroi latérale (9), la paroi latérale (9) délimitant sur son pourtour un passage (11) pour la pâte (5), et avec une ouverture de remplissage (13) pour introduire la pâte (5) dans le passage (11) ; et
un dispositif de séparation (17) configuré pour séparer la pâte (5) par portions ;
dans lequel le dispositif d'alimentation (7) est configuré de telle sorte que la pâte (5) introduite par l'ouverture de remplissage (13) s'écoule le long d'une direction d'écoulement (15) à travers le passage (11) vers le dispositif de séparation (17) ;
dans lequel une première partie (37) de la paroi latérale (9) relie un premier coin (29) de la paroi latérale (9) à un deuxième coin (31) de la paroi latérale (9) ;
dans lequel une deuxième partie (39) de la paroi latérale (9) relie un troisième coin (33) de la paroi latérale (9) à un quatrième coin (35) de la paroi latérale (9) ; et
dans lequel la première partie (37) de la paroi latérale (9) et la deuxième partie (39) de la paroi latérale (9) se font face,
**caractérisé en ce que**
une position d'une distance la plus faible (45) entre la première partie (37) de la paroi latérale (9) et la deuxième partie (39) de la paroi latérale (9) le long d'une direction d'extension de la première partie (37) de la paroi latérale (9) depuis le premier coin (29) jusqu'au deuxième coin (31) est plus proche d'un centre entre le premier coin (29) et le deuxième coin (31) que du premier coin (29) et plus proche du centre entre le premier coin (29) et le deuxième coin (31) que du deuxième coin (31).

2. Dispositif de portionnement selon la revendication 1, dans lequel, au moins à la position de la distance la plus faible (45) pour un écoulement de pâte le long de la direction d'écoulement (15), il existe un rétrécissement local d'une section transversale de passage du passage (11) dans un plan de coupe perpendiculaire à la direction d'écoulement (15).

3. Dispositif de portionnement selon la revendication 1 ou 2, dans lequel une surface intérieure de la paroi latérale (9) délimitant le passage (11) est bombée dans le passage (11) au moins à la position de la distance la plus faible (45) entre la première partie (37) de la paroi latérale (9) et la deuxième partie (39) de la paroi latérale (9).

4. Dispositif de portionnement selon l'une des revendications précédentes, dans lequel, lors d'une progression le long de la direction d'extension de la première partie (37) de la paroi latérale (9) depuis le premier coin (29) jusqu'au deuxième coin (31), la distance entre la première partie (37) de la paroi latérale (9) et la deuxième partie (39) de la paroi latérale (9) augmente d'abord puis diminue à nouveau.

5. Dispositif de portionnement selon l'une quelconque des revendications précédentes, dans lequel la première partie (37) de la paroi latérale (9) et la deuxième partie (39) de la paroi latérale (9) sont symétriques l'une par rapport à l'autre.

6. Dispositif de portionnement selon l'une quelconque des revendications précédentes, dans lequel la direction d'extension de la première partie (37) de la paroi latérale (9) depuis le premier coin (29) jusqu'au deuxième coin (31) est une direction d'extension principale du dispositif d'alimentation (7) perpendiculaire à la direction d'écoulement (15).

7. Dispositif de portionnement selon l'une des revendications précédentes, dans lequel, dans un plan de coupe perpendiculaire à la direction d'écoulement (15), une section de passage du passage (11) pour un écoulement de pâte le long de la direction d'écoulement (15) est au moins sensiblement rectangulaire.

8. Dispositif de portionnement selon l'une des revendications précédentes, dans lequel la paroi latérale (9) est de forme variable au moins par endroits.

9. Dispositif de portionnement selon l'une quelconque des revendications précédentes, comprenant en outre un dispositif de réglage (47) configuré pour régler localement de manière variable la distance entre la première partie (37) de la paroi latérale (9) et la deuxième partie (39) de la paroi latérale (9).

10. Dispositif de portionnement selon l'une quelconque des revendications précédentes, comprenant en outre un dispositif de réglage (47) configuré pour régler de manière variable un rétrécissement local d'une section de passage du passage (11) dans un plan de coupe perpendiculaire à la direction d'écoulement (15).

11. Dispositif de portionnement selon la revendication 9 ou 10, dans lequel le dispositif de réglage (47) est configuré pour déformer localement la paroi latérale (9).

12. Dispositif de portionnement selon l'une quelconque des revendications 9 à 11, dans lequel le dispositif de réglage (47) est configuré pour régler de manière variable la distance la plus faible (45) entre la première partie (37) de la paroi latérale (9) et la deuxième partie (39) de la paroi latérale (9).

13. Dispositif de portionnement selon l'une des revendications précédentes, dans lequel le dispositif de séparation (17) est conçu comme un tambour en étoile.

14. Dispositif de portionnement selon l'une quelconque des revendications précédentes, dans lequel le dispositif d'alimentation (7) est configuré pour transférer la pâte (5) au dispositif de séparation (17) sur une section complète de passage du passage (11).

15. Utilisation d'un dispositif d'alimentation (7) avec une section de passage rétrécie par endroits dans un plan de coupe perpendiculaire à une direction d'écoulement (15), afin d'amener la pâte (5) s'écoulant le long de la direction d'écoulement (15) à travers le dispositif d'alimentation (7) vers un dispositif de séparation (17) pour séparer la pâte (5) par portions, de telle sorte que la pâte (5) atteigne le dispositif de séparation (17) sur toute la section de passage du dispositif d'alimentation (7).
